Europäisches Patentamt

European Patent Office

Office européen des brevets

(11) Numéro de publication : **0 631 119 A1**

# (12) DEMANDE DE BREVET EUROPEEN

(21) Numéro de dépôt : **94401373.9**

(22) Date de dépôt : **17.06.94**

(51) Int. Cl.$^5$ : **G01J 3/46**

(30) Priorité : **23.06.93 FR 9307625**

(43) Date de publication de la demande :
**28.12.94 Bulletin 94/52**

(84) Etats contractants désignés :
**DE FR GB IT**

(71) Demandeur : **SUPERBA S.A.**
**13 rue de Pfastatt**
**F-68200 Mulhouse (FR)**

(72) Inventeur : **Tretsch, Hubert**
**24c, Rue des Vergers**
**F-68200 Brunstatt (FR)**
Inventeur : **Masotte, Philippe**
**13 Rue du Rehland**
**F-68920 Wintzenheim (FR)**
Inventeur : **Thibault, Didier**
**11 Rue de la Préfecture**
**F-88700 Bru (FR)**

(74) Mandataire : **Keib, Gérard et al**
**Bouju Derambure (Bugnion) S.A.,**
**52 rue de Monceau**
**F-75008 Paris (FR)**

(54) **Procédé et dispositif pour déterminer les concentrations en colorants d'un mélange, et leur application au contrôle en continu d'un bain de teinture.**

(57) Le dispositif pour déterminer les concentrations en colorants d'un mélange (7) comprend des moyens de préparation adaptés à préparer, à partir du mélange (7), et à amener un mélange à analyser (2) dans une cuve d'analyse (3) d'un spectrophotomètre (1) pour mesurer la réponse spectrale du mélange à analyser (2), et des moyens informatiques (4) adaptés à décomposer la réponse spectrale mesurée en une somme de réponses spectrales de solutions d'un colorant pur à une concentration déterminée.

Utilisation notamment pour contrôler les bains de teinture pour des fibres textiles.

FIG.5

EP 0 631 119 A1

La présente invention concerne un procédé pour déterminer les concentrations en colorants d'un mélange et un dispositif pour la mise en oeuvre de ce procédé.

Elle concerne également l'application de ce dispositif pour contrôler en continu les concentrations en colorants d'un bain de teinture, notamment pour la teinture de textiles.

Dans l'industrie de la teinture, la méthode de contrôle des bains de teinture utilisée actuellement consiste à réaliser une teinture d'essai sur une machine de laboratoire et à comparer visuellement la pièce de tissu teinte avec une pièce de tissu de référence. D'éventuelles corrections sont alors apportées au bain de teinture jusqu'à l'obtention de la teinte de référence recherchée.

Cette méthode est très coûteuse en temps de préparation et en main-d'oeuvre.

De plus, les quantités de colorants utilisés sont importantes, notamment pour la teinture de tapis, et une erreur coûte vite très cher.

Enfin, dans les installations de teinture en continu, lorsque les concentrations en colorants du bain de teinture varient, la non-conformité des tissus teints n'est détectée qu'après la teinture des tissus et entraînent le rejet d'une partie de la production en fin de fabrication, ce qui est coûteux en temps et en matières premières (tissus, colorants...).

La présente invention a pour but de remédier aux inconvénients précités et d'apporter de nombreux avantages dans l'industrie de la teinture.

Elle permet notamment d'opérer un contrôle, en amont de l'opération de teinture, sur les bains de teinture afin d'éviter les pertes de colorants et les erreurs de teinture.

Le procédé visé par l'invention est adapté à déterminer les concentrations en colorants d'un mélange par spectrophotométrie consistant à placer un échantillon sur le trajet d'un rayon lumineux émis par un spectrophotomètre et à mesurer la réponse spectrale de l'échantillon.

Suivant l'invention, il est caractérisé en ce qu'il comporte les étapes suivantes:

a) mesure, sur un intervalle prédéterminé de longueurs d'ondes L, et pour chaque colorant n de la réponse spectrale de solutions de base composées dudit colorant n pur à des concentrations prédéterminées $C_n$;

b) détermination, pour chaque colorant n et pour une série de longueurs d'onde L, d'une constante $K(n,L)$ égale sensiblement à l'accroissement de l'absorbance A en fonction de la concentration $C_n$ dudit colorant n et mise en mémoire desdites constantes $K(n,L)$;

c) mesure, sur ledit intervalle prédéterminé de longueurs d'onde L, de la réponse spectrale du mélange;

d) détermination, à la longueur d'onde Ln associée à la plus grande valeur de l'absorbance An pour chaque colorant n, de la valeur de l'absorbance $A(L_n)$ dudit mélange; et

e) détermination de la concentration $C_n$ de chaque colorant n dans ledit mélange par résolution du système d'équations dans lequel, pour chaque colorant n,

$$A(L_n) \;=\; \Sigma_i \; K(i,L_n)C_i$$

où i varie sur l'ensemble des colorants dans ledit mélange.

Ainsi, grâce au procédé selon l'invention, on peut, par mesure de la réponse spectrale d'un mélange de colorants, et donc de l'absorbance, connaître les concentrations en colorants du mélange.

On peut ainsi, avant teinture, prélever un échantillon du bain de teinture et, par analyse spectrale, connaître les concentrations en colorants de ce bain de teinture.

Selon une version préférée de l'invention, le procédé selon l'invention, mis en oeuvre pour déterminer les concentrations en colorants d'un mélange témoin, comporte en outre l'étape suivante:

(f) mise en mémoire des concentrations en colorants dudit mélange témoin.

Ainsi, lorsqu'on souhaite obtenir une certaine teinte, on réalise un mélange témoin sans se préoccuper des concentrations des colorants introduits jusqu'à l'obtention de la teinte recherchée.

Les concentrations en colorants du mélange témoin sont ensuite déterminées et enregistrées grâce au procédé de l'invention.

Selon une version avantageuse de l'invention, le procédé selon l'invention, mis en oeuvre pour contrôler la conformité des concentrations en colorants d'un mélange par rapport à un mélange témoin, comprend en outre la détermination pour les étapes c) à e) du procédé des concentrations en colorants du mélange à contrôler et la comparaison des concentrations du mélange témoin et des concentrations du mélange à contrôler pour chaque colorant.

Avant chaque opération de teinture, on peut donc vérifier la conformité d'un bain de teinture avec un mélange témoin afin d'obtenir toujours la même teinte.

La reproductibilité des couleurs obtenues est ainsi parfaite, la comparaison n'étant plus réalisée visuellement avec une pièce de tissu de référence, mais par la mesure exacte des concentrations en colorants.

De plus, pour vérifier la conformité du bain de teinture, l'opérateur n'a plus besoin d'essayer cette teinture sur un textile, ce qui représente un gain de temps considérable.

Selon un autre aspect de l'invention, le dispositif pour la mise en oeuvre du procédé selon l'invention comprend un spectrophotomètre adapté à mesurer la réponse spectrale d'un mélange à analyser, des moyens de préparation adaptés à préparer et à amener le mélange à analyser dans une cuve d'analyse du spectrophotomètre et les moyens informatiques adaptés à commander le fonctionnement des moyens de préparation et du spectrophotomètre et à conduire les étapes b), d) et e) du procédé.

Le dispositif permet de réaliser toutes les étapes du procédé quel que soit le mélange à analyser: solutions de base constituées d'un colorant pur à différentes concentrations, mélanges témoins, mélanges à contrôler tels que des bains de teinture.

Le fonctionnement du spectrophotomètre et les étapes de calcul du procédé sont entièrement pilotés par les moyens informatiques de manière automatique.

D'autres particularités et avantages de l'invention apparaîtront encore dans la description ci-après.

Aux dessins annexés donnés à titre d'exemples non limitatifs:

- la figure 1 illustre les réponses spectrales de solutions de base d'un colorant pur;
- la figure 2 est une courbe de l'absorbance en fonction de la concentration d'un colorant pur;
- la figure 3 illustre la réponse spectrale d'un mélange de colorants;
- la figure 4 représente schématiquement une première version d'un dispositif selon l'invention;
- la figure 5 représente schématiquement une deuxième version du dispositif de l'invention;
- la figure 6 est une vue schématique d'une première application de l'invention;
- la figure 7 est une vue schématique d'une deuxième application de l'invention; et
- la figure 8 est un détail du dispositif selon une troisième version de l'invention.

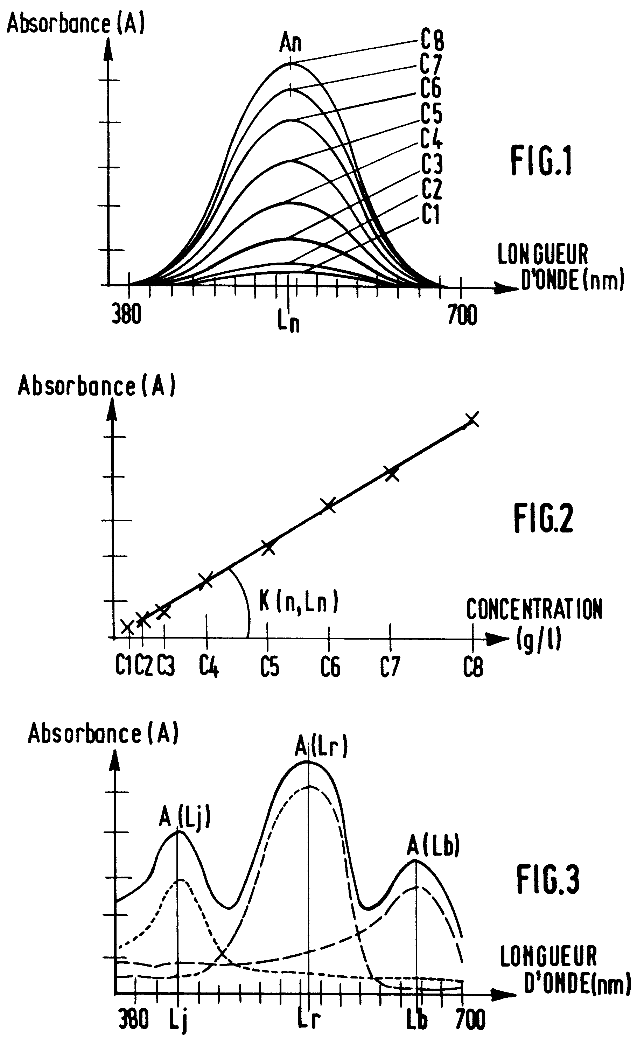

Comme illustré sur les figures 1 à 3, le procédé pour déterminer les concentrations Cn en colorants n d'un mélange comporte les étapes suivantes:

a) mesure, sur un intervalle prédéterminé de longueurs d'ondes L, et pour chaque colorant n de la réponse spectrale de solutions de base composées dudit colorant n pur à des concentrations prédéterminées C1 à C8 ;

b) détermination, pour chaque colorant n et pour une série de longueurs d'onde L, d'une constante K(n,L) égale sensiblement à l'accroissement de l'absorbance A en fonction de la concentration Cn du colorant n et mise en mémoire des constantes K(n,L);

c) mesure, sur l'intervalle prédéterminé de longueurs d'onde L, de la réponse spectrale du mélange;

d) détermination, à la longueur d'onde Ln associée à la plus grande valeur de l'absorbance An

pour chaque colorant n, de la valeur de l'absorbance A(Ln) du mélange; et

e) détermination de la concentration Cn de chaque colorant n dans le mélange par résolution du système d'équations dans lequel, pour chaque colorant n

$$A(Ln) \;=\; \sum_i K(i,Ln)Ci$$

où i varie sur l'ensemble des colorants n contenus dans le mélange.

Ainsi, pour chaque colorant n on mesure la réponse spectrale, c'est-à-dire l'absorbance A sur une plage de longueurs d'onde, d'une série de solutions de base constituées du colorant n pur dilué différemment.

La réponse spectrale est mesurée pour huit solutions de base de concentrations différentes C1 à C8 en colorant n pur.

On mesure, pour chaque colorant n, la réponse spectrale de solutions de base composées du colorant n pur à des concentrations comprises entre 0,001 g/l et 0,1 g/l.

Ces huit mesures de réponse spectrale permettent d'avoir une bonne approximation des variations de l'absorbance en fonction de la concentration Cn du colorant n pour une longueur d'onde L donnée.

Les longueurs d'onde L sont de préférence comprises entre 380 et 700 nanomètres et appartiennent donc au domaine du visible.

Les mesures des réponses spectrales sont réalisées sur cet intervalle de longueurs d'onde L, la valeur des longueurs d'onde variant suivant un pas de 5 nm.

On détermine ensuite une constante K(n,L) qui est fonction de chaque colorant n et de la longueur d'onde L.

La figure 2 illustre la variation de l'absorbance A en fonction de la concentration Cn du colorant n, qui est sensiblement linéaire et possède donc une pente constante K(n,L) pour chaque longueur d'onde L.

La courbe de la figure 2 représente cette variation de l'absorbance pour une longueur d'onde Ln qui correspond aux pics d'absorbance, c'est-à-dire aux plus grandes valeurs de l'absorbance, pour un colorant n donné. Le calcul des constantes K(n,L) est réalisé par régression linéaire (méthode des moindres carrés).

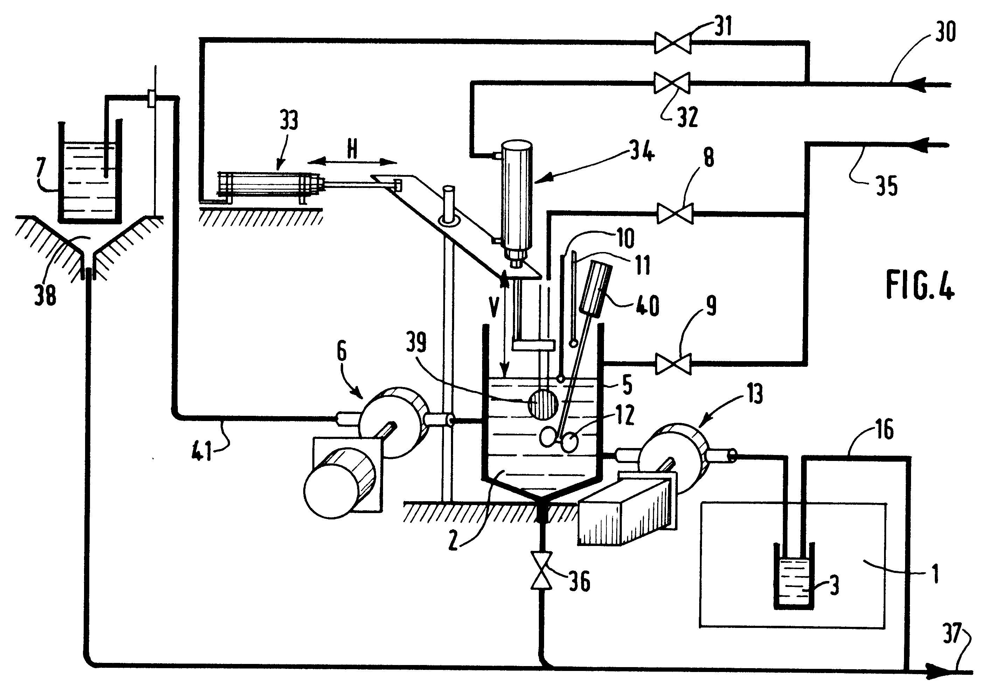

La figure 3 illustre ensuite la réponse spectrale d'un mélange comportant trois colorants, j, r, b (jaune, rouge, bleu) dans des concentrations Cj, Cr, Cb à déterminer grâce à la résolution du système d'équations suivant:

A(Lj) = K(j,Lj)Cj + K(r,Lj)Cr + K(b,Lj)Cb
A(Lr) = K(j,Lr)Cj + K(r,Lr)Cr + K(b,Lr)Cb
A(Lb) = K(j,Lb)Cj + K(r,Lb)Cr + K(b,Lb)Cb

dans lequel les constantes K (n,L) ont été déterminées et enregistrées dans les étapes a) et b) du procédé selon l'invention.

On peut donc ainsi, pour tout mélange de colorants connus, déterminer la concentration en chacun des colorants du mélange.

Le procédé peut être mis en oeuvre pour déterminer les concentrations Cnt en colorants n d'un mélange témoin.

Il comporte alors en outre l'étape suivante:

f) mise en mémoire des concentrations Cnt en colorants n dudit mélange témoin.

Ainsi, lorsque l'opérateur a déterminé un mélange de colorants n qui permet d'obtenir une teinte désirée, on détermine grâce au procédé de l'invention la composition en colorants de ce mélange dit témoin et on mémorise cette composition comme mélange témoin.

Grâce au procédé de l'invention, on peut donc avoir en mémoire les compositions en colorants n d'un ensemble de mélanges témoins qui correspondent à des bains de teinture standards que l'on souhaite pouvoir reformuler plusieurs fois afin d'obtenir toujours la même teinte.

Le procédé est ensuite mis en oeuvre pour contrôler la conformité des concentrations Cn en colorants n d'un mélange par rapport à un mélange témoin.

Le procédé comprend en outre la détermination par les étapes c) à e) du procédé des concentrations Cn en colorants n du mélange à contrôler et la comparaison des concentrations Cnt du mélange témoin et des concentrations Cn du mélange à contrôler pour chaque colorant n.

Lorsque l'on souhaite obtenir une teinte donnée correspondant à un mélange témoin mis en mémoire, on réalise un bain de teinture de manière empirique puis on vérifie que les concentrations Cn en colorants n du bain de teinture sont bien conformes à celles du mélange témoin.

On peut donc vérifier la conformité des bains de teinture avant l'opération de teinte des textiles, ce qui évite tout gaspillage de matières et les erreurs de teinture.

De plus, le procédé mis en oeuvre pour réguler les concentrations Cn en colorants n d'un mélange à contrôler par rapport à un mélange témoin, comprend, à partir de la valeur de comparaison obtenue entre les concentrations Cnt, Cn du mélange témoin et du mélange à contrôler, la détermination des quantités d'eau et de colorants n à introduire dans le mélange à contrôler pour égaliser les concentrations Cnt et Cn en colorants n.

Ainsi, lorsque le bain de teinture réalisé n'est pas conforme au mélange témoin correspondant à la teinte que l'on désire obtenir, selon des tolérances paramétrables, on connaît, grâce au procédé de l'invention, les quantités d'eau et de colorants n à rajouter dans le bain de teinture pour rendre celui-ci conforme au mélange témoin.

Ainsi, si certains colorants n sont trop concentrés, on indiquera la quantité d'eau à rajouter au bain de teinture pour faire redescendre la concentration du colorant de plus haute concentration à la valeur désirée, puis les rajouts éventuels pour les autres colorants n.

Une première version du dispositif de mise en oeuvre du procédé décrit ci-dessus est représentée schématiquement à la figure 4.

Il comprend un spectrophotomètre 1 adapté à mesurer la réponse spectrale d'un mélange à analyser 2, des moyens de préparation adaptés à préparer et à amener le mélange à analyser 2 dans une cuve d'analyse 3 du spectrophotomètre 1, et des moyens informatiques (non représentés) adaptés à commander le fonctionnement des moyens de préparation et du spectrophotomètre 1 et à conduire les étapes b), d) et e) dudit procédé.

Les moyens informatiques sont adaptés en outre à mettre en mémoire des concentrations Cnt en colorants n de mélanges témoins et à comparer les concentrations Cn en colorants 4 d'un mélange à contrôler avec les concentrations Cnt d'un mélange témoin.

Les moyens de préparation comprennent une cuve de mélange 5, des moyens d'introduction 6 d'un mélange de base 7 adaptés à fournir une quantité prédéterminée du mélange de base 7 dans la cuve de mélange 5, des moyens de remplissage 8, 9 en eau adaptés à fournir de l'eau dans la cuve de mélange 5, des moyens de détection 10, 11, adaptés à détecter le volume contenu dans la cuve de mélange 5 et à commander le fonctionnement des moyens de remplissage en eau 8, 9, et des moyens d'introduction 6 du mélange de base 7, des moyens de mélange 12 adaptés à mélanger le mélange à analyser 2 contenu dans la cuve de mélange 5 et des moyens de sortie 13 adaptés à amener le mélange à analyser 2 de la cuve de mélange 5 à la cuve d'analyse 3 du spectrophotomètre 1.

Le mélange de base 7 peut être soit un colorant n pur, soit un mélange témoin dont on souhaite déterminer et enregistrer les concentrations Cn en colorants n, soit un mélange à contrôler pour vérifier sa conformité avec un mélange témoin.

Les moyens d'introduction 6 du mélange de base 7 comprennent une pompe à piston 6 entraînée par un moteur pas-à-pas, qui amène une quantité de mélange de base 7 dans la cuve de mélange 5.

Les moyens de remplissage 8, 9 en eau comportent deux conduits alimentés par une arrivée d'eau 35 et équipés chacun d'une électrovanne 8, 9 qui autorise ou non le passage de l'eau.

L'un des moyens de remplissage 8 débouche dans une buse d'ancrage 39 qui peut être positionnée dans la cuve de mélange 5 ou bien escamotée au-dessus de celle-ci grâce à un système de déplacement par vérins 33, 34 permettant respectivement le déplacement suivant une direction horizontale M et une direction verticale V de la buse 39.

Les vérins 33, 34 fonctionnent à l'air dont l'arrivée 30 est commandée grâce à deux électrovannes 31, 32.

Les moyens de mélange 12 comportent un mélangeur 12 actionné en rotation par un moteur 40.

Les moyens de sortie 13 comprennent un conduit d'alimentation et d'évacuation 16 de la cuve d'analyse 3 de spectrophotomètre 1 et un moteur 13 associé à une pompe qui fait circuler le mélange à analyser 2 dans le conduit 16 et la cuve d'analyse 3.

En fonctionnement, la pompe 6 du mélange de base 7 amène le mélange de base 7 jusqu'à la cuve de mélange 5 pour remplir un circuit d'alimentation 41 reliant la réserve de mélange de base 7 à la cuve de mélange 5.

La buse 33 est placée grâce aux vérins 33, 34 dans la cuve de mélange 5.

La cuve de mélange se remplit d'eau par l'arrosage de la buse 39 grâce à l'ouverture de l'électrovanne 8, une électrovanne 36, permettant la vidange par le fond de la cuve de mélange 5, étant ouverte.

Le mélange de base 7 qui a été introduit dans la cuve de mélange 5 lors du remplissage du circuit d'alimentation 41 en mélange de base 7, est ainsi éliminé et entraîné par l'eau jusqu'à une évacuation à l'égout 37.

Puis l'électrovanne de vidange 36 se ferme et la cuve de mélange se remplit d'eau jusqu'à détection d'un niveau de remplissage rapide par un premier détecteur 10 (environ 90% du volume final d'eau).

La buse d'arrosage 39 est ensuite placée en position escamotée au-dessus de la cuve de mélange 5.

La pompe 6 de mélange de base amène ensuite une quantité prédéterminée de mélange de base 7 dans la cuve de mélange 5.

Si le mélange de base est un colorant pur que l'on désire étalonner, la quantité introduite dépendra de la concentration que l'on désire obtenir dans le mélange à analyser 2, qui constituera alors une des solutions de base utilisées lors de l'étalonnage.

La quantité de colorant introduite est alors calculée par rapport au volume total d'eau qui sera amené dans la cuve de mélange 5.

L'agitateur 12 est mis en marche grâce au moteur 40.

L'électrovanne 9 est alors ouverte afin de compléter le remplissage en eau de la cuve de mélange 5 jusqu'à détection du volume final par un second détecteur 11.

Le mélange à analyser 2 ainsi obtenu est homogénéisé grâce au mélangeur 12.

La pompe 13 entraîne alors dans le conduit de circulation 16 et la cuve d'analyse 3 le mélange à analyser et le spectrophotomètre mesure alors la réponse spectrale du mélange à analyser.

Lorsque le mélange de base 7 est un mélange témoin ou un mélange à contrôler, la quantité d'eau ajoutée dans la cuve de mélange 5 est calculée de manière à obtenir une dilution suffisante pour obtenir une bonne plage de travail pour le spectrophotomètre. Cette quantité d'eau peut éventuellement être nulle.

Ce dispositif comprend en outre des moyens de lavage adaptés à rincer, entre chaque préparation d'un mélange à analyser 2, les moyens de préparation et la cuve d'analyse 3 du spectrophotomètre 1.

En fin d'analyse, l'électrovanne 36 s'ouvre pour laisser s'écouler le mélange 2 vers l'égout 37.

La buse d'arrosage 39 est reconduite dans le bac de mélange 5 pour le nettoyer. Après quelques instants, l'électrovanne 36 se referme pour laisser monter le niveau d'eau jusqu'au niveau de remplissage rapide, la pompe 6 est inversée pour pomper de l'eau claire dans le circuit d'alimentation 41 en mélange de base 7, afin de le nettoyer; l'eau de lavage refoulée est récupérée dans un circuit de débordement 38 et conduite vers l'égout 37.

En même temps, la pompe 13 fait circuler cette eau claire vers la cuve d'analyse 3 et le conduit de circulation 16.

Lorsque tous les circuits sont considérés "propres", l'électrovanne de vidange 36 s'ouvre de nouveau pour laisser s'écouler l'eau de lavage vers l'égout 37.

Les moyens informatiques 4, typiquement un micro-ordinateur comportant un certain nombre de mémoires, permettent de piloter l'ensemble du système, et notamment de commander l'actionnement des électrovannes 8, 9, 31, 32, 36, des moteurs des pompes 6, 13 et du mélangeur 12.

L'ordinateur enregistre également les réponses spectrales réalisées par le spectrophotomètre 1 et les analyse conformément au procédé de l'invention pour déterminer les concentrations $C_n$ en colorants $n$, enregistrer les concentrations $C_{nt}$ des mélanges témoins et comparer les concentrations $C_n$ des colorants $n$ des mélanges à contrôler avec des mélanges témoins.

L'opérateur a ainsi à sa disposition en mémoire sur disque dur ou sur disquettes, les constantes $K(n,L)$ d'un certain nombre de colorants purs, repérés par leur nom par exemple, tel que Tectilon rouge, Tectilon jaune...

Il possède également en mémoire des "recettes" de mélanges témoins auxquels on a donné un nom afin de pouvoir les rappeler pour établir des comparaisons avec des mélanges à contrôler.

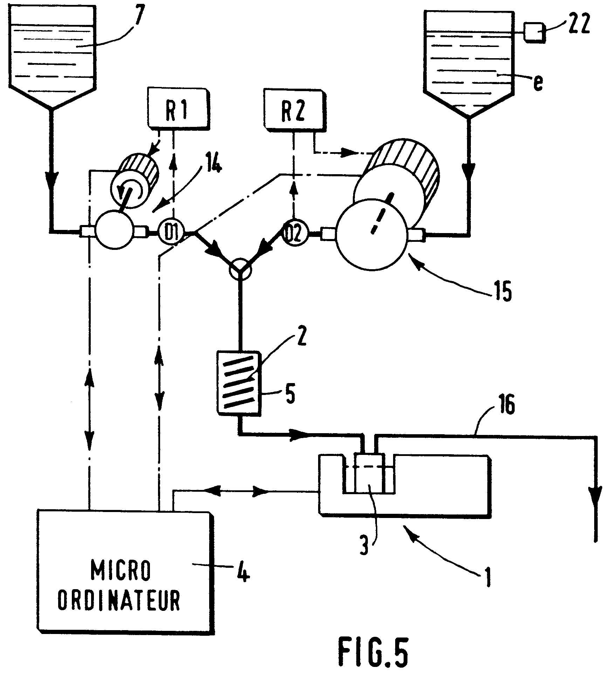

Selon une autre réalisation du dispositif pour mettre en oeuvre le procédé de l'invention, illustrée à la figure 5, les moyens de préparation comprennent une cuve de mélange 5, des premiers moyens de fourniture 14 d'un mélange de base 7 dans la cuve de mélange 5 adaptés à fournir en continu le mélange de base 7 à un premier débit prédéterminé, des seconds moyens de fourniture 15 d'eau dans la cuve de mélange 7 adaptés à fournir en continu de l'eau à un second débit fixé en fonction du premier débit, et des moyens de sortie 16 adaptés à amener le mélange à analyser 2 de la cuve de mélange 5 à la cuve d'analyse 3 du spectrophotomètre 1.

Les premier et second moyens de fourniture d'un mélange de base ou d'eau sont des pompes volumétriques de précision 13, 14 actionnées chacune par un moteur. Les moyens de sortie sont constitués d'un conduit 16 de circulation en continu du mélange à analyser 2 dans la cuve d'analyse du spectrophotomètre 1.

Ce dispositif permet d'effectuer des dilutions du mélange de base en flux continu. Les temps de réponse sont ainsi plus rapides.

Le niveau d'eau e dans le bac d'alimentation de la pompe 15 à eau est maintenu constant et régulé grâce à un détecteur de niveau 22 qui commande une arrivée d'eau (non représentée).

En fonctionnement, l'opérateur règle le débit d'eau délivré par la pompe 15 en agissant sur la vitesse de rotation du moteur associé, le débit de la pompe ayant été au préalable étalonné en fonction de la vitesse du moteur.

Le débit de la pompe 15 est ainsi réglé par exemple à une valeur fixe de 500 ml/mn.

Ensuite, l'opérateur règle le débit de l'autre pompe 14, en agissant également sur la vitesse de rotation du moteur associé, de manière à obtenir le rapport de dilution souhaité.

Si le mélange de base est un colorant pur que l'on désire étalonner, le rapport de dilution permettra d'obtenir différentes solutions de base à des concentrations en colorant pur différentes.

Si le mélange de base est un mélange témoin ou un mélange à contrôler, tel qu'un bain de teinture, le choix du rapport de dilution est guidé par le besoin d'obtenir un mélange à analyser 2 dont la concentration se trouve dans une plage de travail correct pour le spectrophotomètre.

Si l'opérateur ne souhaite pas diluer le mélange de base, le débit d'eau e délivré par la pompe 15 peut bien entendu être nul.

Des débitmètres D1 et D2 sont positionnés sur les circuits de dilution à la sortie des pompes 14 et 15 de manière à mesurer en continu le débit de liquide délivré par ces pompes 14 et 15.

Ces débitmètres D1 et D2 sont couplés respectivement à des régulateurs R1 et R2 qui permettent d'inscrire la vitesse des moteurs des pompes 14 et 15 de manière à maintenir chacun des débits égal au débit déterminé par l'opérateur.

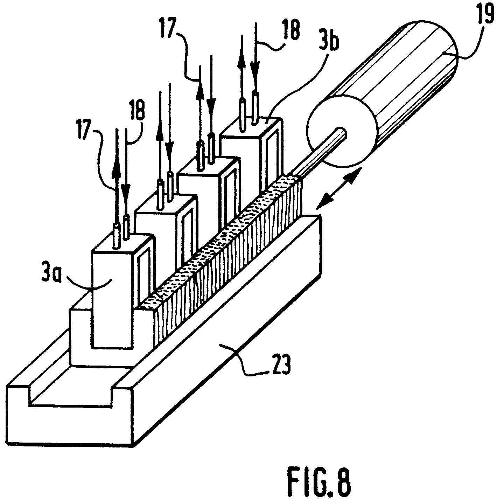

Comme illustré figure 8, dans une autre version du dispositif, les moyens de préparation comprennent une série de tubes 17, 18 adaptés à distribuer en continu un mélange de base 7 dans une série de cuves d'analyse 3a, 3b de trajet optique différent et des moyens de déplacement 19 adaptés à positionner une des cuves d'analyse 3a, 3b en face d'un faisceau lumineux du spectrophotomètre 1.

Ainsi, l'opérateur n'a pas à intervenir sur le rapport de dilution pour trouver la plage de travail la mieux adaptée à la mesure spectrophotométrique.

On adapte dans le compartiment de mesure du spectrophotomètre un passeur de cuve automatique, constitué de plusieurs cuves à circulation 3a, 3b de trajet optique différent.

Ces cuves 3a, 3b peuvent coulisser sur un rail de guidage 23 grâce à un vérin multiposition 19 qui permet d'amener la cuve d'analyse 3a, 3b sélectionnée en face du faisceau lumineux du spectrophotomètre 1.

Dans les dispositifs des figures 5 et 8, lorsque le mélange de base est un mélange à contrôler, les moyens informatiques 4 déterminent, à partir de la valeur de comparaison obtenue entre les concentrations Cnt, Cn du mélange témoin et du mélange à contrôler, les quantités d'eau e et de colorants n à introduire dans le mélange à contrôler pour égaliser les concentrations Cnt et Cn en colorants n.

On peut donc ainsi réguler en continu des concentrations Cn en colorants n d'un bain de teinture au cours de l'opération de teinture.

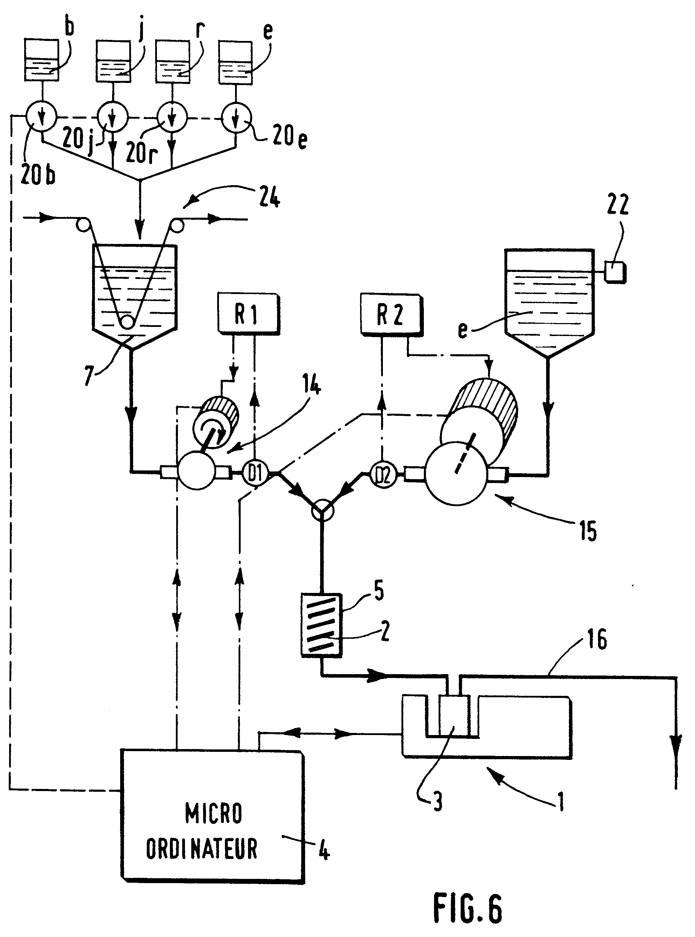

Ainsi, la figure 6 illustre l'application du dispositif représenté à la figure 5 pour contrôler en continu les concentrations Cb, Cj, Cr, en colorants b, j, r (bleu, jaune, rouge par exemple) d'un bain de teinture 7. Un échantillon du bain de teinture 7 est prélevé en continu et est introduit dans le dispositif comme mélange de base 7, les moyens informatiques 4 étant adaptés à commander des dispositifs d'introduction 20e, 20b, 20j et 20r d'eau e et de colorants b, j et r) dans le bain de teinture 7 en fonction des quantités, déterminées par les moyens informatiques 4, d'eau e et de colorants b, j, r à introduire dans le bain de teinture 7 pour égaliser les concentrations Cb, Cj, Cr en colorants b, j, r avec les concentrations Cbt, Cjt, Crt en colorants b, j, r d'un mélange témoin.

Le mélange témoin utilisé peut être en fait le bain de teinture analysé au début de l'opération de teinture. On vérifie ainsi que les concentrations Cn en colorants n ne varient pas pendant toute l'intégralité de l'opération de teinture d'un textile 24 par exemple qui traverse en continu le bain de teinture.

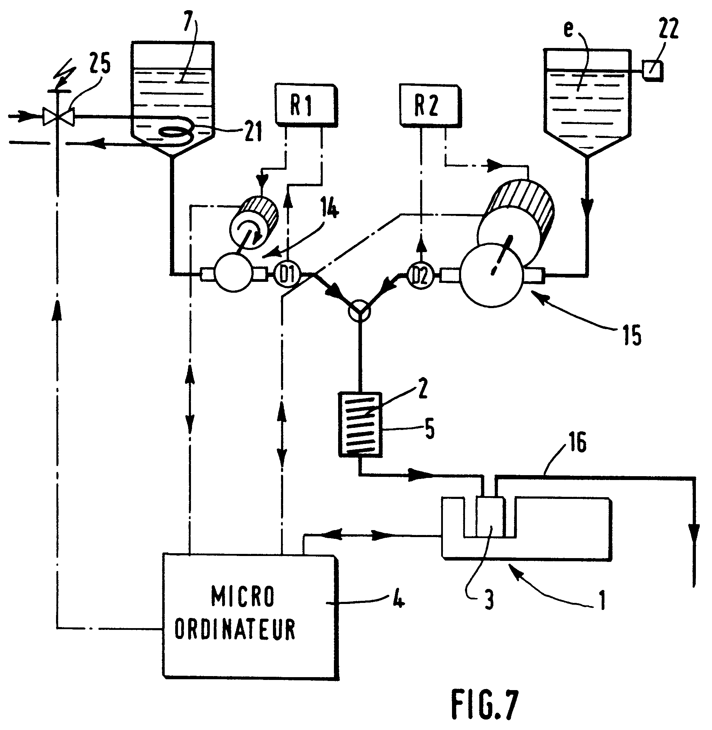

La figure 7 illustre également une autre application du dispositif de la figure 5 pour contrôler en continu les concentrations Cn en colorants n d'un bain de teinture 7 utilisé pour une opération de teinture de textiles par épuisement.

Un échantillon du bain de teinture est prélevé en continu et est introduit dans le dispositif comme mélange de base 7, les moyens informatiques 4 régulant la température d'un moyen de chauffage 21 disposé dans le bain de teinture 7 en fonction de la valeur de comparaison obtenue entre les concentrations Cnt, Cn d'un mélange témoin et du mélange à contrôler.

Dans le procédé de teinture par épuisement, l'épuisement des colorants n du bain de teinture 7 doit être le plus régulier possible pour éviter les problèmes de mal uni sur la matière textile teinte.

L'opérateur programme sur le micro-ordinateur 4 la vitesse d'épuisement en colorants n souhaitée (en % par minute), ce qui permet par exemple de déterminer un certain nombre de mélanges témoins dont les concentrations Cn en colorants n varient de manière régulière au cours du temps. On peut ainsi déterminer un mélange témoin par minute et vérifier, toutes les minutes, que le bain de teinture a bien des concentrations en colorants égales à celles du mélange témoin considéré au même instant.

Le micro-ordinateur pilote alors l'ouverture et la fermeture d'une vanne de chauffage 25 permettant ainsi de réguler la température du moyen de chauffage, une résistance 21 par exemple, et de réguler ainsi la vitesse d'épuisement, étant entendu que plus le bain de teinture 7 est chaud, plus la vitesse d'épuisement en colorants n est rapide.

Bien entendu, l'invention n'est pas limitée aux exemples décrits ci-dessus, et de nombreuses modifications peuvent être apportées sans sortir du cadre de l'invention.

**Revendications**

1. Procédé pour déterminer les concentrations (Cn) en colorants (n) d'un mélange par spectrophotométrie, consistant à placer un échantillon sur le trajet d'un rayon lumineux émis par un spectrophotomètre et à mesurer la réponse spectrale dudit échantillon, caractérisé en ce qu'il comporte les étapes suivantes:
   a) mesure, sur un intervalle prédéterminé de longueurs d'ondes (L), et pour chaque colorant (n) de la réponse spectrale de solutions de base composées dudit colorant (n) pur à des concentrations prédéterminées (Cn);
   b) détermination, pour chaque colorant (n) et pour une série de longueurs d'onde (L), d'une constante (K(n,L)) égale sensiblement à l'accroissement de l'absorbance (A) en fonction de la concentration (Cn) dudit colorant (n) et mise en mémoire desdites constantes (K(n,L));
   c) mesure, sur l'intervalle prédéterminé de longueurs d'onde (L), de la réponse spectrale du mélange;
   d) détermination, à la longueur d'onde (Ln) associée à la plus grande valeur de l'absorbance (An) pour chaque colorant (n), de la valeur de l'absorbance (A(Ln)) du mélange; et

e) détermination de la concentration (Cn) de chaque colorant (n) dans le mélange par résolution du système d'équations dans lequel, pour chaque colorant (n),

$$A(Ln) = \sum_i K(i,Ln)Ci$$

où i varie sur l'ensemble des colorants dans le mélange.

2. Procédé conforme à la revendication 1, mis en oeuvre pour déterminer les concentrations (Cnt) en colorants (n) d'un mélange témoin, caractérisé en ce qu'il comporte en outre l'étape suivante:
   f) mise en mémoire des concentrations (Cnt) en colorants (n) dudit mélange témoin.

3. Procédé conforme à la revendication 2, mis en oeuvre pour contrôler la conformité des concentrations (Cn) en colorants (n) d'un mélange par rapport à un mélange témoin, caractérisé en ce qu'il comprend en outre la détermination par les étapes c) à e) dudit procédé des concentrations (Cn) en colorants (n) du mélange à contrôler et la comparaison des concentrations (Cnt) dudit mélange témoin et des concentrations (Cn) du mélange à contrôler pour chaque colorant (n).

4. Procédé conforme à la revendication 3, mis en oeuvre pour réguler les concentrations (Cn) en colorants (n) d'un mélange à contrôler par rapport à un mélange témoin, caractérisé en ce qu'à partir de la valeur de comparaison obtenue entre les concentrations (Cnt, Cn) du mélange témoin et du mélange à contrôler, on détermine les quantités d'eau et de colorants (n) à introduire dans ledit mélange à contrôler pour égaliser les concentrations (Cnt, Cn) en colorants (n).

5. Procédé conforme à l'une des revendications 1 à 4, caractérisé en ce que les longueurs d'onde (L) sont comprises entre 380 et 700 nanomètres.

6. Procédé conforme à l'une des revendications 1 à 5, caractérisé en ce que pendant les étapes a) et c) dudit procédé, la valeur des longueurs d'onde (L) varie suivant un pas de 5 nm sur ledit intervalle prédéterminé.

7. Procédé conforme à l'une des revendications 1 à 6, caractérisé en ce qu'à l'étape a), on mesure, pour chaque colorant (n), la réponse spectrale de solutions de base composées dudit colorant (n) pur à des concentrations comprises entre 0,001 g/l et 0,1 g/l.

8. Procédé conforme à la revendication 7, caractérisé en ce que la réponse spectrale est mesurée pour huit solutions de base de concentrations différentes en colorant (n) pur.

9. Dispositif pour la mise en oeuvre du procédé conforme à l'une des revendications 1 à 8, caractérisé en ce qu'il comprend un spectrophotomètre (1) adapté à mesurer la réponse spectrale d'un mélange à analyser (2), des moyens de préparation adaptés à préparer et à amener ledit mélange à analyser (2) dans une cuve d'analyse (3) du spectrophotomètre (1), et des moyens informatiques (4) adaptés à commander le fonctionnement desdits moyens de préparation et du spectrophotomètre (1) et à conduire les étapes b), d) et e) dudit procédé.

10. Dispositif conforme à la revendication 9, caractérisé en ce qu'en outre les moyens informatiques (4) sont adaptés à mettre en mémoire des concentrations (Cnt) en colorants (n) de mélanges témoins et à comparer les concentrations (Cn) en colorants (n) d'un mélange à contrôler avec les concentrations (Cnt) d'un mélange témoin.

11. Dispositif conforme à l'une des revendications 9 ou 10, caractérisé en ce que les moyens de préparation comprennent une cuve de mélange (5), des moyens d'introduction (6) d'un mélange de base (7) adaptés à fournir une quantité prédéterminée du mélange de base (7) dans ladite cuve de mélange (5), des moyens de remplissage (8, 9) en eau adaptés à fournir de l'eau dans la cuve de mélange (5), des moyens de détection (10, 11) adaptés à détecter le volume contenu dans la cuve de mélange (5) et à commander le fonctionnement des moyens de remplissage en eau (8, 9) et des moyens d'introduction (6) du mélange de base (7), des moyens de mélange (12) adaptés à mélanger le mélange à analyser (2) contenu dans la cuve de mélange (5) et des moyens de sortie (13) adaptés à amener ledit mélange à analyser (2) de la cuve de mélange (5) à la cuve d'analyse (3) du spectrophotomètre (1).

12. Dispositif conforme à la revendication 11, caractérisé en ce qu'il comprend en outre des moyens de lavage adaptés à rincer, entre chaque préparation d'un mélange à analyser (2), les moyens de préparation et la cuve d'analyse (3) du spectrophotomètre (1).

13. Dispositif conforme à la revendication 10, caractérisé en ce que les moyens de préparation comprennent une cuve de mélange (5), des premiers moyens de fourniture (14) d'un mélange de base (7) dans la cuve de mélange (5) adaptés à fournir en continu ledit mélange de base (7) à un premier débit prédéterminé, des seconds moyens de fourniture (15) d'eau dans la cuve de mélange (7) adaptés à fournir en continu de l'eau à un second débit fixé en fonction du premier débit, et des moyens de sortie (16) adaptés à amener ledit mélange à analyser (2) de la cuve de mélange (5) à la cuve d'analyse (3) du spectrophotomètre (1).

14. Dispositif conforme à la revendication 13, caractérisé en ce que les moyens informatiques (4) sont adaptés à réguler lesdits premier et second débits.

15. Dispositif conforme à la revendication 10, caractérisé en ce que les moyens de préparation comprennent une série de tubes (17, 18) adaptés à distribuer en continu un mélange de base (7) dans une série de cuves d'analyse (3a, 3b) de trajet optique différent et des moyens de déplacement (19) adaptés à positionner une des cuves d'analyse (3a, 3b) en face d'un faisceau lumineux du spectrophotomètre (1).

16. Dispositif conforme à l'une des revendications 13 à 15, caractérisé en ce que les moyens informatiques (4) déterminent, à partir de la valeur de comparaison obtenue entre les concentrations (Cnt, Cn) du mélange témoin et du mélange à contrôler, les quantités d'eau et de colorants (n) à introduire dans ledit mélange à contrôler pour égaliser les concentrations (Cnt, Cn) en colorants (n).

17. Application du dispositif conforme à la revendication 16 pour contrôler en continu les concentrations (Cn) en colorants (n) d'un bain de teinture (7), caractérisée en ce qu'un échantillon du bain de teinture est prélevé en continu et est introduit dans ledit dispositif comme mélange de base (7), les moyens informatiques (4) étant adaptés à commander des dispositifs d'introduction (20e, 20b, 20j, 20r,) d'eau (e) et de colorants (b, j, r) dans le bain de teinture (7) en fonction des quantités, déterminées par lesdits moyens informatiques (4), d'eau (e) et de colorants (b, j, r) à introduire dans le bain de teinture (7) pour égaliser les concentrations (Cb, Cj, Cr) en colorants (b, j, r) avec les concentrations (Cbt, Cjt, Crt) en colorants (b, j, r) d'un mélange témoin.

18. Application du dispositif conforme à l'une des revendications 13 à 15 pour contrôler en continu les concentrations (Cn) en colorants (n) d'un bain de teinture (7) utilisé pour une opération de teinture par épuisement de textiles, caractérisée en ce qu'un échantillon du bain de teinture est prélevé en continu et est introduit dans ledit dispositif comme mélange de base (7), les moyens informatiques (4) régulant la température d'un moyen de chauffage (21) disposé dans le bain de teinture (7) en fonction de la valeur de comparaison obtenue entre les concentrations (Cnt, Cn) d'un mélange témoin et du mélange à contrôler.

FIG.1

FIG.2

FIG.3

FIG.4

EP 0 631 119 A1

**FIG.5**

FIG.6

FIG.7

**FIG.8**

**Office européen des brevets**

# RAPPORT DE RECHERCHE EUROPEENNE

Numero de la demande

EP 94 40 1373

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| Y | US-A-3 088 479 (CHRISTIE)<br>* colonne 1, alinéa 1 -alinéa 2 *<br>* colonne 2, dernier alinéa - colonne 3, ligne 20 * | 1 | G01J3/46 |
| A | * colonne 3, dernier alinéa - colonne 4, ligne 13; figure 1 * | 11 | |
| Y | APPLIED OPTICS,<br>vol.11, no.11, Novembre 1972, NEW YORK US<br>pages 2551 - 2553<br>N. OHTA ET AL 'Spectral color matching by means of minimax approximation'<br>* page 2251, colonne de droite, alinéa 1 *<br>* page 2552, colonne de gauche, ligne 16 - ligne 18 * | 1 | |
| A | JSDC,<br>vol.96, 1980<br>pages 570 - 575<br>A.N. DERBYSHIRE ET AL 'The monitoring of dyebath composition by transmission measurements'<br>* page 575, colonne de gauche, ligne 27 - ligne 32 *<br>* page 575, colonne de gauche, ligne 37 - ligne 40 * | 1-3,5,13 | **DOMAINES TECHNIQUES RECHERCHES (Int.Cl.5)**<br><br>G01J |
| A | US-A-4 403 866 (FALCOFF)<br>* colonne 3, ligne 49 - ligne 61 *<br>* colonne 4, ligne 51 - colonne 5, ligne 6; colonne 5, ligne 57 - colonne 6, ligne 3 * | 1,5,9-12 | |

-/--

Le présent rapport a été établi pour toutes les revendications

| Lieu de la recherche | Date d'achèvement de la recherche | Examinateur |
|---|---|---|
| LA HAYE | 19 Septembre 1994 | Thomas, R.M. |

EPO FORM 1503 03.82 (P04C02)

**Office européen des brevets**

# RAPPORT DE RECHERCHE EUROPEENNE

Numero de la demande

EP 94 40 1373

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-3 867 040 (LOFFLER)<br>* colonne 2, ligne 33 - ligne 37 *<br>* colonne 2, ligne 48 - ligne 52 *<br>* colonne 4, ligne 1 - ligne 3 *<br>* colonne 5, ligne 1 - ligne 3 *<br>* colonne 6, ligne 19 - ligne 23 *<br>* figures * | 18 | |
| A | US-A-3 807 872 (PRONIER)<br>* colonne 3, dernier alinéa - colonne 4, ligne 3;  figure 4 * | 15 | |
| A | ANALYTICAL CHEMISTRY,<br>vol.45, no.3, Mars 1973, COLUMBUS US<br>N. OHTA 'Estimating absorption bands of component dyes by means of principal component analysis' | | |

DOMAINES TECHNIQUES RECHERCHES (Int.Cl.5)

Le présent rapport a été établi pour toutes les revendications

| Lieu de la recherche | Date d'achèvement de la recherche | Examinateur |
|---|---|---|
| LA HAYE | 19 Septembre 1994 | Thomas, R.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)